Europäisches Patentamt

European Patent Office

Office européen des brevets

(11) Veröffentlichungsnummer: **0 258 713 B1**

# (12) EUROPÄISCHE PATENTSCHRIFT

(45) Veröffentlichungstag der Patentschrift: **20.03.91**

(51) Int. Cl.⁵: **G03B 23/02**, G03B 21/64, G03B 23/14

(21) Anmeldenummer: **87111809.7**

(22) Anmeldetag: **14.08.87**

(54) **Diamagazin.**

(30) Priorität: **01.09.86 DE 8623452 U**

(43) Veröffentlichungstag der Anmeldung:
**09.03.88 Patentblatt 88/10**

(45) Bekanntmachung des Hinweises auf die
Patenterteilung:
**20.03.91 Patentblatt 91/12**

(84) Benannte Vertragsstaaten:
**AT DE FR IT NL**

(56) Entgegenhaltungen:
DE-A- 2 636 628
DE-A- 2 835 165
DE-A- 3 325 241
US-A- 3 131 826

(73) Patentinhaber: **Rollei Fototechnic GmbH**
**Salzdahlumer Strasse 196**
**W-3300 Braunschweig(DE)**

(72) Erfinder: **Adamski, Günter**
**Koblenzer Strasse 46**
**W-3300 Braunschweig(DE)**
Erfinder: **Prochnow, Claus**
**Lange Strasse 38**
**W-3300 Braunschweig(DE)**

(74) Vertreter: **Gramm, Werner, Dipl.-Ing. et al**
**Patentanwälte Gramm + Lins Theodor-**
**Heuss-Strasse 2**
**W-3300 Braunschweig(DE)**

## Beschreibung

Die Erfindung betrifft ein kastenförmiges Diamagazin, das ein an seiner ersten Stirnseite angeordnetes erstes Kupplungsteil mit einer, bezogen auf die Längsachse des Magazins, hinterschnittenen Ausnehmung und an der zweiten Stirnseite ein zweites Kupplungsteil mit einem Mitnehmer aufweist, so daß in Kupplungsstellung zweier solcher Magazine der Mitnehmer des einen Magazins in die Ausnehmung des anderen Magazins eingreift.

Eine derartige Ausführungsform ist in dem DE-GM 85 10 240 dargestellt und beschrieben. Dabei ist das erste Kupplungsteil in Form eines nach oben geöffneten Hakens und das zweite Kupplungsteil in Form eines nach unten geöffneten Hakens ausgebildet. Das Einsetzen des dem ersten Magazin folgenden zweiten Magazins erfolgt je nach Projektorkonstruktion etwa 6 bis 18 Dias vor dem Ende des ersten Magazins. Ebenso erfolgt das Abnehmen des ersten Magazins nach dem Durchlauf von ca. 6 bis 18 Dias des zweiten Magazins. Durch die beschriebene Ausbildung läßt sich eine Endlosprojektion durchführen, wobei die Magazine ohne Abstand vom Projektor transportiert werden, und der gleichzeitige Transport ohne manuelles Nachschieben sichergestellt ist. Um einen nahtlosen Magazinwechsel ohne Unterbruch zu erreichen, ragt das eine Kupplungsteil über die ihm zugeordnete Stirnseite hinaus, während das andere Kupplungsteil in die es tragende Stirnseite eingelassen ist.

Die DE-PS 33 25 241 offenbart eine Vorrichtung zum Vorführen von Dias, bestehend aus einem Dia-Projektor und mehreren länglichen Dia-Magazinen, die an einem Eingabeende aufeinanderfolgend in den Dia-Projektor einführbar sind, und die an einem Ausgabeende des Dia-Projektors nach Vorführung der Dias des jeweiligen Magazins entnommen werden können. Vorgesehen ist eine Kupplungseinrichtung zum Ankuppeln des Magazinendes eines Dia-Magazins an das Magazinende eines anderen Dia-Magazins, wobei die Kupplungseinrichtung aus ineinandergreifenden Magazinendwandabschnitten der sich in Längsrichtung gegenüberliegenden Magazinenden besteht, die in gekuppeltem Zustand zusammen eine vollständige gemeinsame Endwand zweier aneinander gereihter Magazine formen. Die ineinandergreifenden Wandabschnitte sind an ihren ineinandergreifenden Wandbereichen hinterschnitten ausgebildet. Dabei besteht der Magazinendwandabschnitt des einen Magazins aus einem unteren Endwandabschnitt und der Magazinwandabschnitt des anderen Magazins aus einem oberen Endwandabschnitt, der den fehlenden Endwandabschnitt des ersten Magazins ersetzt. Nachteilig bei dieser Ausführungsform ist die geringe Stabilität der Endwände sowie die Gefahr, daß aufgrund der Halbierung der Endwand das letzte Dia über den unteren Endwandabschnitt hinwegkippen kann.

Der Erfindung liegt die Aufgabe zugrunde, das eingangs beschriebene Diamagazin hinsichtlich seiner Handhabung und Stabilität zu verbessern.

Diese Aufgabe wird erfindungsgemäß dadurch gelöst, daß die Stirnseiten aus Endwandabschnitten bestehen, von denen einige halbe, andere volle Wandstärke aufweisen, und wieder andere Aussparungen sind, wobei die Endwandabschnitte halber Wandstärke, voller Wandstärke und die Aussparungen so angeordnet sind, daß in Kupplungsstellung zweier solcher Magazine die Endwandabschnitte der ersten Stirnseite des einen Magazins mit den Endwandabschnitten der zweiten Stirnseite des anderen Magazins eine gemeinsame Endwand voller Wandstärke bilden, indem sich jeweils die Endwandabschnitte halber Wandstärke mit den Endwandabschnitten halber Wandstärke und die Endwandabschnitte voller Wandstärke mit den Aussparungen ergänzen.

Die erfindungsgemäße Ausführungsform macht es im Gegensatz zu dem Diamagazin gemäß DE-GM 85 10 240 möglich, auch im Kupplungsbereich jedes Magazinfach mit einem Diapositiv zu bestükken. Da stirnseitig jede Magazinendwand in voller Höhe vorhanden ist, können die Diapositive auch aus den jeweils letzten Magazinfächern nicht herausfallen. Die im Kupplungszustand ineinandergreifenden Endwandabschnitte ergänzen sich zu einer vollen Wandstärke, so daß sich im Kupplungsbereich eine verbindungssteife Kupplung ergibt.

Zur weiteren Verbesserung der Stabilität ist es vorteilhaft, wenn Endwandabschnitte halber Wandstärke zumindest überwiegend an den seitlichen Enden der Stirnseite vorgesehen sind.

Bei Dia-Magazinen mit unterer Zahnteilung ist es vorteilhaft, wenn ein halbe Materialstärke aufweisender Endzahn an dem einen Magazinende gegenüber einem ebenfalls halbe Materialstärke aufweisenden Endzahn am anderen Magazinende um die halbe Materialstärke höhenversetzt ist, so daß in Kupplungsstellung zweier Magazine zwei solche Endzähne sich überbzw. untergreifen.

In der Zeichnung sind einige als Beispiele dienende Ausführungsformen der Erfindung dargestellt. Es zeigen:

Figur 1 das eine Ende eines streifenförmigen Dia-Magazins;

Figur 2 das andere Ende des in Figur 1 dargestellten DiaMagazins;

Figur 3 die Unterseite des Dia-Magazins gemäß den Figuren 1 und 2 und

Figuren 4 und 5 eine abgewandelte Ausführungsform in einer Darstellung gemäß den Figuren 1 und 2.

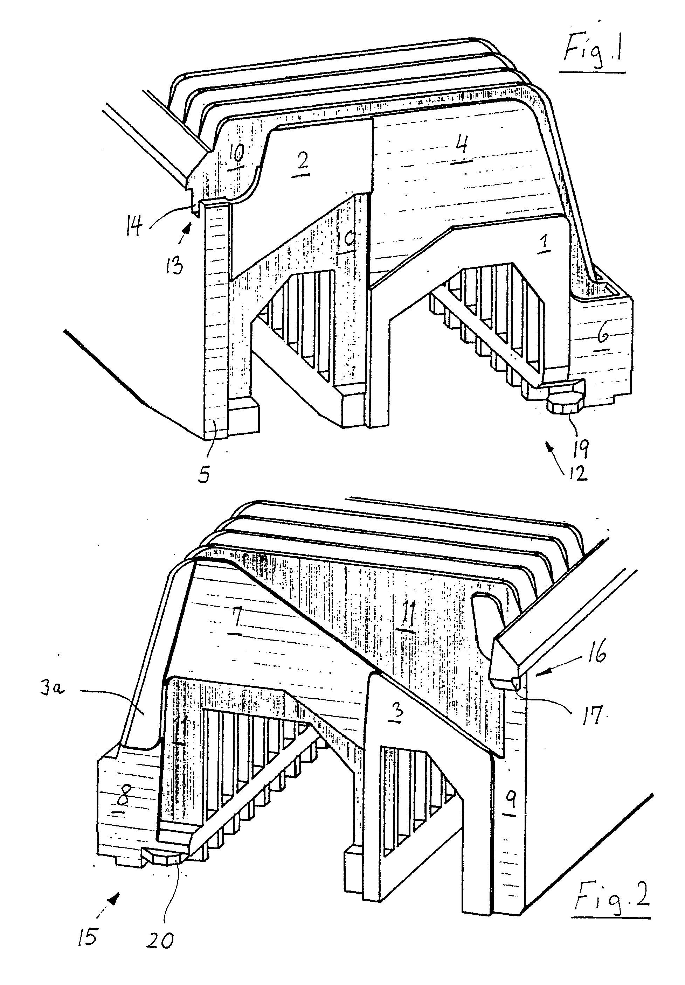

Die Figuren 1 und 2 zeigen die beiden Stirnenden eines zur Aufnahme von 5 x 5 -Dias bestimmten Magazins. Die ohne Schraffur dargestellten Magazinendwandabschnitte 1,2,3,3a weisen jeweils volle Wandstärke auf, während die mit horizontaler Schraffur gekennzeichneten Magazinendwandabschnitte 4,5,6,7,8,9 nur jeweils halbe Wandstärke aufweisen. Die mit lotrechter Schraffur versehene Wand 10 bzw. 11 ist die jeweils hinter den genannten Magazinendwandabschnitten liegende Wand. Die Ausbildung ist so, daß die sich in Längsrichtung jeweils gegenüberliegenden Magazinenden aus in gekuppeltem Zustand ineinandergreifenden, zusammen eine vollständige gemeinsame Endwand zweier aneinander gereihter Magazine formenden Magazinendwandabschnitten 1 bis 9 bestehen, von denen die nur halbe Wandstärke aufweisenden Magazinendwandabschnitte 4,5 und 6 an deckungsgleich ausgebildeten, ebenfalls nur halbe Wandstärke aufweisenden Magazinendwandabschnitten 7,9,8 des sich anschließenden Magazins anliegen. Dabei sind die Magazinendwandabschnitte 5,6,8,9 mit halber Wandstärke an den Längsleisten des Magazins angebunden.

Die in Figur 1 dargestellte Stirnseite 12 des Dia-Magazins weist ein erstes Kupplungsteil 13 in Form eines nach oben geöffneten Hakens auf, der eine bezogen auf die Längsachse des Magazins hinterschnittene Ausnehmung 14 bildet. An der in Figur 2 dargestellten gegenüberliegenden Stirnseite 15 ist ein zweites Kupplungsteil 16 in Form eines nach unten geöffneten Hakens angeordnet, der einen Mitnehmer 17 bildet, der in Kupplungsstellung zwischen zwei Magazinen in die genannte Ausnehmung 14 des ersten Kupplungsteils 13 eingreift.

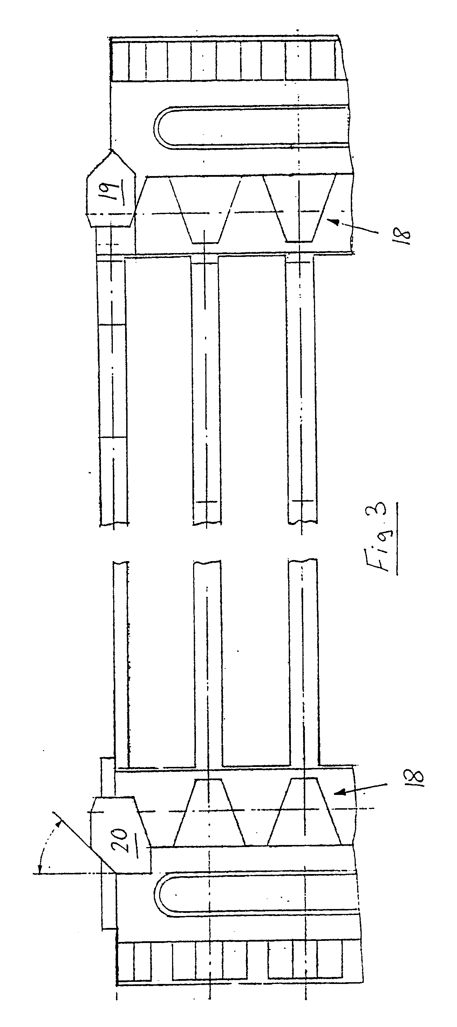

Figur 3 zeigt die Unteransicht des Dia-Magazins gemäß den Figuren 1 und 2 und läßt eine untere Zahnung 18 erkennen, deren einer Endzahn 19 halbe Materialstärke aufweist (siehe Figur 1) und gegenüber dem ebenfalls halbe Materialstärke aufweisenden Endzahn 20 an der anderen Stirnseite 15 um die halbe Materialstärke höhenversetzt ist und diesen in gekuppelter Stellung zweier Magazine untergreift (siehe Figur 2).

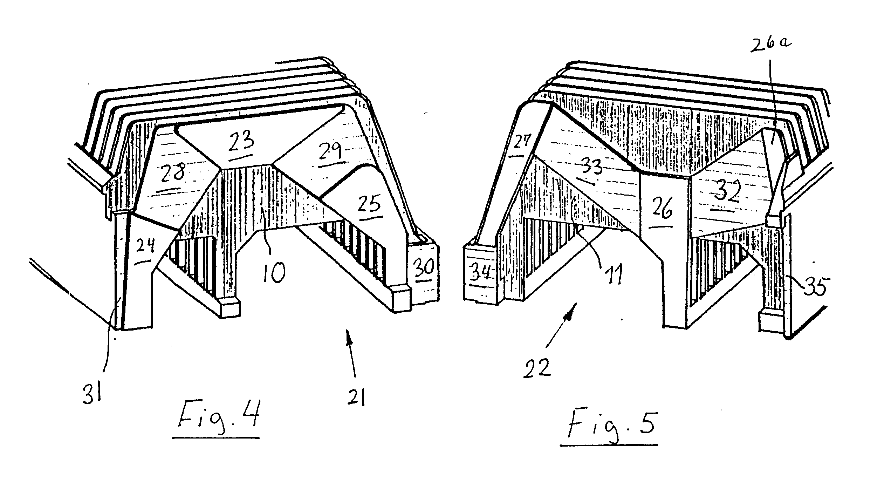

Die Figuren 4 und 5 zeigen die Stirnseiten 21 und 22 eines DiaMagazins, das zur Aufnahme von 7 x 7-Dias bestimmt ist. Hier sind die vollwandig ausgebildeten Magazinendwandabschnitte mit den Bezugszeichen 23,24,25 in der einen Stirnseite 21 und mit den Bezugszeichen 26,26a,27 in der gegenüberliegenden Stirnseite 22 gekennzeichnet. Die Stirnseite 21 läßt außerdem Magazinendwandabschnitte 28,29,30,31 mit halber Wandstärke erkennen, denen in der anderen Stirnseite 22 halbwandig ausgebildete Magazinendwandabschnitte 32,33,34,35 entsprechen.

## Ansprüche

1. Kastenförmiges Diamagazin, das ein an seiner ersten Stirnseite (12;21) angeordnetes erstes Kupplungsteil (13) mit einer, bezogen auf die Längsachse des Magazins, hinterschnittenen Ausnehmung (14) und an der zweiten Stirnseite (15;22) ein zweites Kupplungsteil (16) mit einem Mitnehmer (17) aufweist, sodaß in Kupplungsstellung zweier solcher Magazine der Mitnehmer des einen Magazins in die Ausnehmung des anderen Magazins eingreift, dadurch gekennzeichnet, daß die Stirnseiten aus Endwandabschnitten (1 bis 9; 23 bis 35) bestehen, von denen einige halbe, andere volle Wandstärke aufweisen, und wieder andere Aussparungen sind, wobei die Endwandabschnitte halber Wandstärke, voller Wandstärke und die Aussparungen so angeordnet sind, daß in Kupplungsstellung zweier solcher Magazine die Endwandabschnitte der ersten Stirnseite des einen Magazins mit den Endwandabschnitten der zweiten Stirnseite des anderen Magazins eine gemeinsame Endwand voller Wandstärke bilden, indem sich Jeweils die Endwandabschnitte halber Wandstärke mit den Endwandabschnitten halber Wandstärke und die Endwandabschnitte voller Wandstärke mit den Aussparungen ergänzen.

2. Diamagazin nach Anspruch 1, dadurch gekennzeichnet, daß Endwandabschnitte (4 bis 9; 28 bis 35) halber Wandstärke zumindest überwiegend an den seitlichen Enden der Stirnseite vorgesehen sind.

3. Diamagazin nach Anspruch 1 oder 2, dadurch gekennzeichnet, daß ein halbe Materialstärke aufweisender Endzahn (19) an dem einen Magazinende gegenüber einem ebenfalls halbe Materialstärke aufweisenden Endzahn (20) am anderen Magazinende um die halbe Materialstärke höhenversetzt ist, so daß in Kupplungsstellung zweier Magazine zwei solche Endzähne sich über- bzw. untergreifen.

## Claims

1. Box-type slide magazine having a first coupling part (13) arranged on its first end side (12;21), with a recess (14), which is undercut relative to the longitudinal axis of the magazine, and, on the second end side (15;22), a second coupling part (16) with a catch (17), so that when two such magazines are in coupled position, the catch of the one magazine engages into the recess of the other magazine, characterised in that the end sides comprise end wall sections (1 to 9; 23 to 35), some of them having half, others having full wall thickness, and yet others being hollows, where the end wall sections of half wall thickness, full wall thickness and the hollows are arranged such that when two such magazines are in coupled position the end wall sections of the first end side of the one magazine form a common end wall of full wall thickness with the end wall sections of the second end side of the other magazine, whereby in each case the end wall sections of half wall thickness complement the end wall sections of half wall thickness, and the end wall sections of full wall thickness complement the hollows.

2. Slide magazine in accordance with Claim 1, characterised in that end wall sections (4 to 9; 28 to 35) of half wall thickness are provided at least predominantly on the lateral ends of the end side.

3. Slide magazine in accordance with Claim 1 or 2, characterised in that an end tooth (19) of half material thickness on the one end of the magazine is offset vertically by half the material thickness with respect to an end tooth (20), also of half material thickness, on the other end of the magazine, so that when two magazines are in coupled position two such end teeth overlie or underlie.

**Revendications**

1. Panier en forme de boîte pour diapositives, qui comporte sur sa première face frontale (12 ; 21) un premier élément d'accouplement (13) muni d'un évidement (14) en contre-dépouille par rapport à l'axe longitudinal du panier et sur la deuxième face frontale (15 ; 22) un deuxième élément d'accouplement (16) pourvu d'un bec (17), de sorte que, en position d'accouplement de deux paniers de ce type, le bec de l'un de ces paniers s'engage dans l'évidement de l'autre panier, caractérisé en ce que les faces frontales sont constituées par des parties (1 à 9 ; 23 à 25) de paroi d'extrémité dont certaines présentent une demi-épaisseur de paroi, d'autres une épaisseur pleine, et d'autres encore étant des évidements, les parties de paroi d'extrémité ayant demi-épaisseur, épaisseur pleine et les évidements étant agencés de telle sorte qu'en position d'accouplement de deux paniers de ce type, les parties de paroi d'extrémité de la première face frontale de l'un des paniers constituent, avec les parties de paroi d'extrémité de la deuxième face frontale de l'autre panier, une paroi d'extrémité commune ayant pleine épaisseur de paroi, du fait que les parties de paroi d'extrémité ayant demi-épaisseur de paroi se complètent mutuellement, et que les parties de paroi d'extrémité ayant pleine épaisseur de paroi complètent les évidements.

2. Panier pour diapositives conforme à la revendication 1, caractérisé en ce que des parties de paroi d'extrémité (4 à 9 ; 28 à 35) ayant demi-épaisseur sont, au moins de façon prédominante, attenantes aux extrémités latérales de la face frontale.

3. Panier pour diapositives conforme à la revendication 1 ou 2, caractérisé en ce qu'une dent d'extrémité (19), située à l'une des extrémités du panier et ayant demi-épaisseur de matière, est décalée en hauteur d'une distance égale à la moitié de l'épaisseur de matière par rapport à une dent d'extrémité (20), qui est située à l'autre extrémité du panier et qui a également demi-épaisseur de matière, et qui recouvre ou est recouverte par l'autre dent d'extrémité dans la position accouplée de deux paniers.

Fig.1

Fig.2

Fig 3

Fig.4

Fig.5

EP 0 258 713 B1